# EUROPEAN PATENT APPLICATION

(11) **EP 4 510 249 A1**
(43) Date of publication of application: **19.02.2025**
(21) Application number: 23191669.3
(22) Date of filing: 16.08.2023
(51) Int. Cl.: H01M 8/0273, H01M 8/0286, H01M 8/242, H01M 8/10

(54) **MEMBRANE ELECTRODE AND FRAME ASSEMBLY FOR FUEL CELL STACKS AND METHOD FOR MAKING**

(71) Applicant: AVL List GmbH, 8020 Graz (AT); AVL Fuel Cell Canada Inc., Burnaby, BC V5A 4W2 (CA)
(72) Inventor: Thomas, Owen, Vancouver, V6E 4V3 (CA)
(74) Representative: Gamper, Bettina

(57) **Abstract**

The invention relates to a membrane electrode and frame assembly (10) for a solid polymer electrolyte fuel cell stack, which comprises a catalyst coated membrane assembly (11), an anode gas diffusion layer and a cathode gas diffusion layer located and a frame (13) for carrying the catalyst coated membrane assembly (11), the frame (13) having a sealing section (135) for providing a sealing function. Two adhesive layers (141, 142) are provided that are bonded to opposite sides of the catalyst coated membrane assembly (11). A first adhesive layer (141) bonds one of the gas diffusion layers (121) to the catalyst coated membrane assembly (11). A second adhesive layer (142) bonds the frame (13) and the other of the gas diffusion layers (122) to the catalyst coated membrane assembly (11). For this, the second adhesive layer (142) comprises at least one connection section (1423) at its inner perimeter (1421) that extends beyond the inner perimeter (131) of the frame (13) to bond the other of the gas diffusion layers (122) to the catalyst coated membrane assembly (11). The invention further relates to a solid polymer electrolyte fuel cell stack, which comprises a series stack of a plurality of said membrane electrode and frame assemblies (10), and to a method of manufacturing said membrane electrode and frame assembly (10).

## Description

This invention relates to membrane electrode and frame assemblies for solid polymer electrolyte fuel cell stacks and to methods for making them. This invention also relates to solid polymer electrolyte fuel cell stacks comprising at least one of said membrane electrode and frame assemblies.

Fuel cells are devices that generate electric power by electrochemically converting fuel and oxidant reactants, such as hydrogen and oxygen or air. A solid polymer electrolyte fuel cell is a type of fuel cell, which employs a proton conducting, solid polymer membrane electrolyte between cathode and anode electrodes. The electrodes typically comprise appropriate catalysts to promote the electrochemical reactions taking place at each electrode. A structure comprising a solid polymer membrane electrolyte sandwiched between these two electrodes is known as a membrane electrode assembly (MEA). For this, the MEA typically comprises a catalyst coated membrane (CCM) and gas diffusion layers (GDLs) applied on each side of the CCM. The CCM is a subassembly, in which appropriate catalyst compositions are applied and bonded to either side of a membrane electrolyte. The GDLs are provided to improve both the distribution of the fluid reactants to the electrodes and the removal of fluid by-products from the electrodes.

In a typical solid polymer electrolyte fuel cell, flow field plates comprising numerous fluid distribution channels for the reactants are provided on either side of a MEA to distribute fuel and oxidant to the respective electrodes and to remove reaction by-products from the fuel cell. Water is the primary by-product in a cell operating on hydrogen and air reactants. Because the output voltage of a single cell is of order of 1V, a plurality of cells is usually stacked together in series for commercial applications in order to provide a higher output voltage. Fuel cell stacks can be connected in arrays of interconnected stacks in series and/or parallel for use in automotive applications and the like.

To efficiently manufacture one of these fuel cell stacks, numerous identical cell assemblies known as "unit cell assemblies" are designed such that they can simply be stacked, one on top of the other, to complete most of the assembly of the stack.

Various designs and assembly methods have been proposed in the art in order to achieve the numerous seals and bonds required in the fuel cell stack. In one approach, the unit cell assembly comprises a frame which is used in the MEA to provide electrical isolation, mechanical alignment, and sealing functions. In such configurations, the frame and MEA are often incorporated together into a subassembly known as a "membrane electrode frame assembly (MEFA)". Typically, adhesives or adhesive layers are employed to bond the various components together.

For example, US 2023/048 138 A1 discloses a MEFA design with a single adhesive layer to provide for multiple bonds between different components of the MEFA.

Despite all progress made in the design of MEFAs, it remains challenging to manufacture MEFAs in high volume manufacturing processes. Depending on the design of the MEFA, manufacturing a MEFA can involve a relatively high amount of manual labor and/or pick-and-place processing due to relatively thin layers of material being handled. However, this type of processing often leads to a reduction in the manufacturing speed and is prone to manufacturing errors. In comparison, high throughput rates in manufacturing MEFAs can be achieved by reverting to roll-to-roll manufacturing, where typically a flexible rolled substrate is continuously carried through different mechanical rollers, which form stations for additive or subtractive manufacturing.

Adding physical structures for providing sealing functionality to the frame design of a MEFA makes high volume processing of MEFAs even more difficult. Some of the reasons for this are explained in the following by reverting to Figures 1 to 3, which show a prior art MEFA (900) that is modified by adding sealing functionality to the frame in accordance to two different approaches. In each approach, it is attempted to avoid deteriorating manufacturing speed. Figure 1 shows the unmodified prior art MEFA (900) as starting point. Figure 2 shows an approach of adding sealing functionality to the frame (930) prior to assembly of the prior art MEFA (900). Figure 3 shows an alternative approach of adding sealing functionality to the frame (930) in a post-bonding step. In detail:

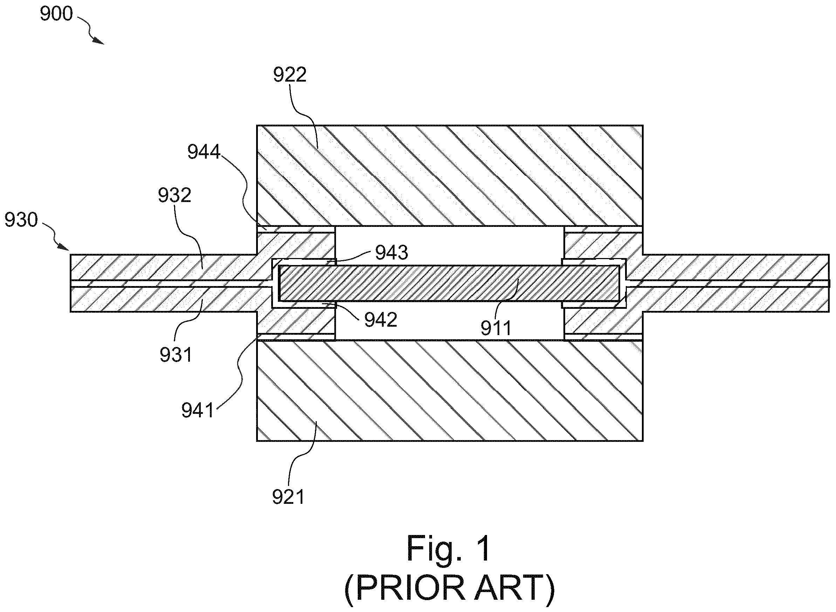

Figure 1 shows an example design for a prior art MEFA (900), which shall be modified by providing its frame structure with sealing means. The prior art MEFA (900) comprises a prior art catalyst coated membrane assembly (911), first and second prior art gas diffusion layers (921, 922) and a prior art frame (930), which is formed by two frame components, namely a prior art first and second frame component (931, 932). The individual components of the prior art MEFA (900) are bonded to each other through adhesive layers, namely prior art first, second, third and fourth adhesive layer (941, 942, 943, 944).

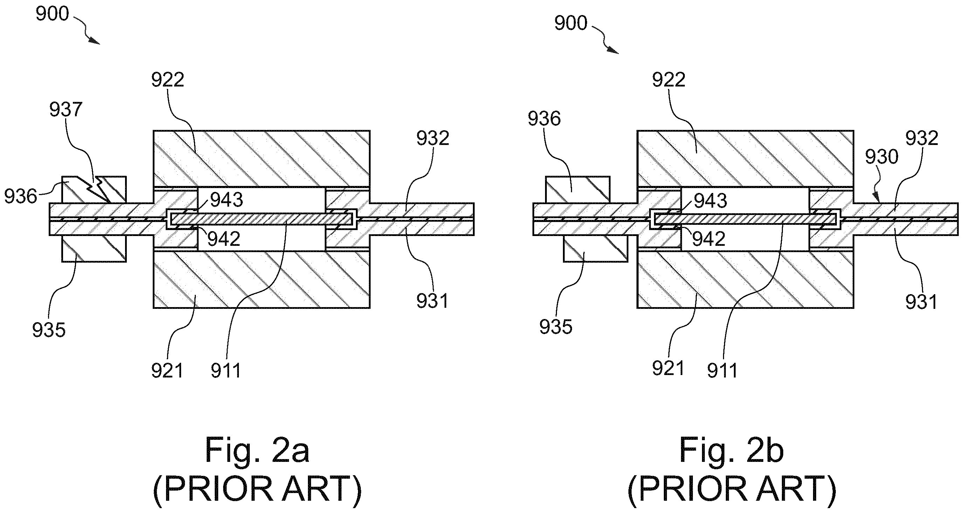

In the prior art MEFA (900) of Figures 2a and 2b, prior to bonding of the prior art frame (930), sealing functionality was incorporated in each of the prior art first and second frame component (931, 932) in form of sealing structures (935, 936). During roll-to-roll processing, however, pressure is applied also to each of these sealing structures (935, 936) due to their outwards bulging shape. Thereby, damage can be inflicted on the sealing structures (935, 936). In Figure 2a, this is indicated by a fracture (937) in one of the sealing structures (936). Further, during roll-to-roll processing, the two sealing structures (935, 936) may be misaligned when bringing the two frame components (931, 932) together for bonding. This is exemplarily shown in Figure 2b. From this, reasons can be seen why prior art MEFA designs may be unsuitable for manufacturing frames having integral sealing structures in high-volume manufacturing processes, such as roll-to-roll processes. Instead, it may be required to revert to manual and/or pick-and-place processing, which is disadvantageous if high-volume manufacturing is desired.

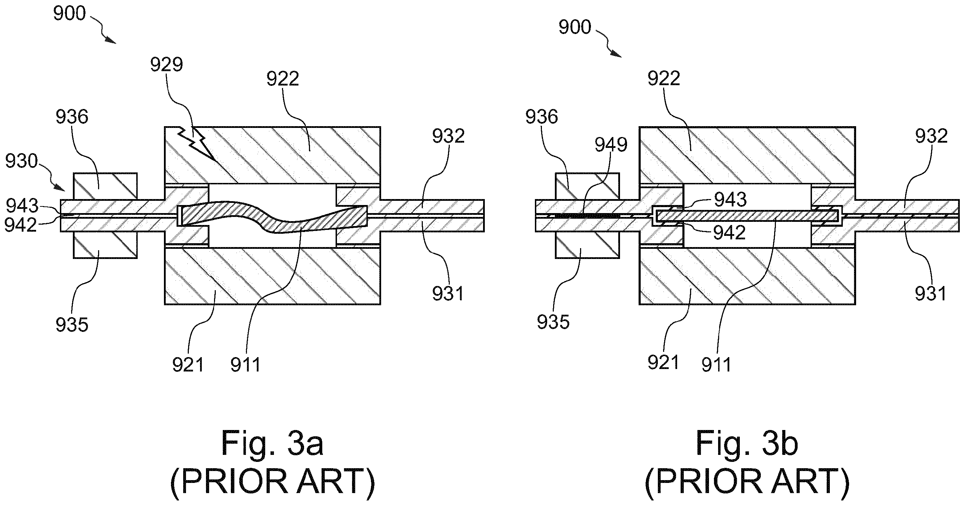

Figures 3a and 3b show an alternative approach, where sealing structures (935, 936) are added to the frame components (931, 932) of the prior art MEFA (900) as part of a post-bonding process. In particular, a liquid injection moulding process is completed to mould sealing structures (935, 936) onto the frame of prior art MEFA (900) in its assembled state. A disadvantage of this approach may be seen in that the liquid injection moulding process requires relatively high temperatures and pressures. Thus, there is an increased risk of the already attached prior art gas diffusion layers (921, 922) being damaged. In Figure 3a, for instance, a fracture (929) of the second prior art gas diffusion layer (922) is shown, which was caused by the mechanical and thermal load on the MEFA (900) during injection moulding. Further, Figure 3a shows how the prior art catalyst coated membrane assembly (911) may be bent or misaligned as consequence of this process. In addition, there is an increased risk of also the frame (931, 932) being deformed. Figure 3b shows that the adhesive layers (941, 942, 943, 944) may be damaged during injection moulding. For instance, the second and third prior art adhesive layers (942, 943) may melt and flow as a result of the applied high moulding temperatures and thus, reduce in size or disintegrate as indicated by damaged section (949).

From the above it becomes apparent that in the prior art, disadvantages exist with regards to implementing high-volume manufacturing of MEFAs with a frame structure having sealing functionality integrated therein.

It is thus, an object of the invention to overcome at least some of these disadvantages. In particular, it is an object of the invention to provide a manufacturing method and a design of a MEFA that allows to increase manufacturing speed for MEFAs having a frame with sealing means integrated therein without compromising structural integrity of the MEFA.

The foregoing technical problem is solved by the membrane electrode and frame assembly of claim 1, the solid polymer electrolyte fuel cell stack of claim 9, the method of manufacturing the membrane electrode and frame assembly of claim 10.

Further advantages and features of the invention are evident from the dependent claims, the description and the drawings. Features and details described in connection with the membrane electrode and frame assembly according to the invention naturally also apply to the solid polymer electrolyte fuel cell stack according to the invention and to the method of manufacturing according to the invention, and vice versa, respectively, so that for disclosure, reference is or can be made mutually to the individual aspects of the invention.

A first aspect of the invention relates to a membrane electrode and frame assembly for a solid polymer electrolyte fuel cell stack. The membrane electrode and frame assembly comprises a catalyst coated membrane assembly, which comprises an anode catalyst layer, a cathode catalyst layer, and a solid polymer membrane electrolyte. The anode catalyst layer and the cathode catalyst layer are bonded to opposite sides of the solid polymer membrane electrolyte. The membrane electrode and frame assembly comprises gas diffusion layers, which comprise an anode gas diffusion layer located adjacent to the anode catalyst layer of the catalyst coated membrane assembly, and a cathode gas diffusion layer located adjacent to the cathode catalyst layer of the catalyst coated membrane assembly. The membrane electrode and frame assembly further comprises a frame for carrying the catalyst coated membrane assembly. The frame extends between an inner perimeter and an outer perimeter and comprises a sealing section for providing a sealing function. The membrane electrode and frame assembly comprises a first adhesive layer and a second adhesive layer, each adhesive layer extending between an inner perimeter and an outer perimeter. The first adhesive layer and the second adhesive layer are bonded to opposite sides of the catalyst coated membrane assembly. The first adhesive layer is located between the catalyst coated membrane assembly and one of the gas diffusion layers such that the first adhesive layer bonds the one of the gas diffusion layers to the catalyst coated membrane assembly. The second adhesive layer and the frame are located between the catalyst coated membrane assembly and the other of the gas diffusion layers such that the second adhesive layer is located adjacent to the catalyst coated membrane assembly and such that the frame is located adjacent to the other of the gas diffusion layers. The second adhesive layer bonds the frame to the catalyst coated membrane assembly. The second adhesive layer comprises at least one connection section at the inner perimeter that extends beyond the inner perimeter of the frame to bond the other of the gas diffusion layers to the catalyst coated membrane assembly.

In the context of this disclosure, a "membrane electrode and frame assembly" or "MEFA" may be understood as referring to an individual assembly, which, for example, makes up a single solid polymer electrolyte fuel cell in an associated fuel cell stack. Preferably, the MEFA may be designed such that a plurality of such assemblies may be stacked between appropriate flow field plate assemblies, such as bipolar plate assemblies or end plate assemblies, to form a fuel cell stack.

A "catalyst coated membrane assembly" or "CCMA" may be understood, for example, a subassembly, in which at least catalyst compositions are applied and bonded to either side of the solid polymer membrane electrolyte. The anode catalyst layer and the cathode catalyst layer may preferably form the electrodes of the MEFA.

"Gas diffusion layers" or "GDL(s)" may be understood, for example, as thin, porous sheets configured for controlling the flow of reactant gases and by-products in and out of the MEFA.

The "frame" may be understood as a preferably rigid structure for providing the CCMA and/or MEFA with mechanical support and preferably also for allowing to align the MEFA with other MEFAs. The frame extends between an inner and an outer perimeter. In the context of this disclosure, the expression "outer perimeter" may generally be understood as an outer edge or a most outer edge of the periphery of a structure. Similarly, the expression "inner perimeter" may generally be understood as an inner edge or a most inner edge of the periphery of a structure. Accordingly, an inner perimeter extending beyond another structure may be understood as extending in an inwards direction with respect to the corresponding outer perimeter. Analogously, an outer perimeter extending beyond another structure may be understood as extending in an outward direction with respect to the corresponding inner perimeter.

The expression "sealing section" may be understood as a portion or area of the frame suitable and/or configured for providing a sealing function. The sealing function may be the provision of structures for facilitating fluid or gas tight sealing when interacting with a corresponding structure of another component, for example.

The "adhesive layers" or "ADL(s)" may be understood as film or sheet materials capable of adhering to components of the MEFA, for example after a chemical or physical activation.

The expression "bonding" may be understood as joining at least two components with a strong material connection. For instance, the materials may be joined by surface bonding (adhesion), which preferably may be initiated by chemical activation.

Thereby, components of the MEFA can be bonded to each other on either side of the CCMA by using two ADLs. Therein, the two ADLs are arranged such that most of the components can be bonded to each other in roll-to-roll processes and only selected components may require the application of a different manufacturing method, such as a pick-and-place process. The configuration of the second ADL with respect to the frame allows that no additional adhesives are needed for attaching the frame to the CCMA. Thereby, the frame can be added with sealing functionality already integrated, so that post-processing steps for supplying sealing functionality can be made redundant. In addition, the frame can be provided with the sealing functionality in a process separate from the assembly of the MEFA so that parallel processing is facilitated, whereby production speed can be increased. Moreover, the frame can be added and attached at a late stage of the assembly process of the MEFA. Thereby, the production speed of the MEFA can be increased without compromising the structural integrity of the MEFA.

In addition, it has been surprisingly found that the MEFA of the invention is also particularly effective in the electrolysis of water. Thus, the MEFA is also suitable for being operated not only as a fuel cell but also as a water electrolyser.

According to a preferred embodiment, the frame may be formed as a plate. For instance, the frame may be flat, i.e. it may have a small thickness relatively to its length and width. Therein, the frame may have two planar opposite side surfaces surrounded by a circumferential front surface. Preferably, the frame may comprise a frame bonding section extending at and/or along its inner perimeter for being connected to the CCMA and/or the GDL. The frame bonding section may extend on at least one side surface extending between the inner and the outer perimeter. Preferably, the frame bonding section may extend on opposite side surfaces with respect to its extension between the inner and the outer perimeter. More preferred, the frame may be arranged so that the frame bonding section overlaps at least with one of the GDLs and with the CCMA.

Preferably, the frame may be arranged with its inner perimeter concentrically about the CCMA. Alternatively and additionally, the first adhesive layer and/or the second adhesive layer may be arranged with their respective inner perimeter concentrically about the CCMA. Preferably, the frame may be arranged with respect to the CCMA such that the CCMA extends at least partially beyond the inner perimeter of the frame. More preferred, the geometric center of the inner perimeter of the frame may be congruent with the geometric center of the CCMA. Alternatively or additionally, the geometric center of the inner perimeter of the frame may overlap with the extension of the CCMA in top view.

Preferably, the adhesive layers may be configured and arranged such that they extend between their respective inner and outer perimeters at an outer edge section of the CCMA so that a central area of the CCMA, which may form an active area of the CCMA, is not covered.

According to a further preferred embodiment, the sealing section may comprise a sealing element for providing the sealing function. The sealing element may preferably be integrally provided with the frame. For instance, the frame may be injection moulded to include a seal. The sealing element may extend transversely to the extension direction of the frame between the inner and outer perimeter. Alternatively or additionally, the sealing element may preferably be made of an elastomeric sealing material. Preferably, the sealing section may be located between the inner perimeter and the outer perimeter of the frame. Preferably, the sealing section may extend at least partially along with the outer perimeter of the frame.

Thereby, fluid or gas tight contact can be provided between a MEFA and an adjoining flow field plate, which comprises fluid distribution channels for the reactants.

According to a preferred embodiment, the catalyst coated membrane assembly, the first adhesive layer, the second adhesive layer, and the one of the gas diffusion layers may be provided as film materials, and/or may be bonded to each other in a roll-to-roll process. Preferably, the materials used for at least one of said layers may be provided on a roll and/or as a roll material on a reel.

Thereby, the processing speed can be significantly improved. Furthermore, by bonding the components to each other in a roll-to-roll process, a strong bond between the components can be established.

According to a preferred embodiment, the first adhesive layer, the second adhesive layer, and the one of the gas diffusion layers may be at least partially cut to size after being bonded to each other so that their outer perimeters are aligned flush with each other. Preferably, the catalyst coated membrane assembly may be cut to size also.

Thereby, a uniform size of the MEFA can be ensured and the manufacturing speed can be improved since multiple components are trimmed simultaneously.

According to a further preferred embodiment, the connection section may form at least part of the inner perimeter of the second adhesive layer. The connection section may extend at least partially or completely along the inner perimeter of the second adhesive layer. Alternatively or additionally, the connection section may be extend such that the inner perimeter of the second adhesive layer is smaller than the inner perimeter of the frame. In addition, the connection section may extend such that the inner perimeter of the second adhesive layer is smaller than the outer perimeter of the catalyst coated membrane assembly.

For instance, the inner perimeter of the second adhesive layer may be considered smaller than the inner perimeter of the frame if a free space surrounded by the inner perimeter of the second adhesive layer is smaller than a free space surrounded by the inner perimeter of the frame.

Thereby, it can be ensured that the connection section provides sufficient contact area for bonding to the frame. Thus, the reliability and strength of the connection between the frame and the CCMA can be increased.

According to a preferred embodiment, the membrane electrode and frame assembly may comprise at least one edge section, where the inner perimeter of the frame, the inner perimeter of the second adhesive layer and/or the inner perimeter of the first adhesive layer may reduce in size in this order. Preferably, the edge section extends along the outer perimeter of the MEFA, the CCMA, and/or the one GDL.

This allows for the other GDL to contact the second adhesive layer and simultaneously provides a gentler transition from the frame to the CCMA. The gentler transition is formed by a gradual height change from the other GDL towards the CCMA. Such configuration allows for an improved mechanical and chemical stability of the MEFA.

Alternatively or additionally, it is also conceivable that the membrane electrode and frame assembly may be configured such that the inner perimeter of the frame, the inner perimeter of the first adhesive layer and the inner perimeter of the second adhesive layer may reduce in size in this order, preferably at the edge section.

Alternatively or additionally, it is also conceivable that the membrane electrode and frame assembly may be configured such that the inner perimeter of the first adhesive layer is identical or smaller than the inner perimeter of the second adhesive layer. Therein, preferably, the inner perimeter of the frame may be identical, smaller or bigger than the inner perimeter of the second adhesive layer.

Alternatively or additionally, the membrane electrode and frame assembly may comprise at least one edge section, where the inner perimeter of the frame, the inner perimeter of the first adhesive layer and the inner perimeter of the second adhesive layer may be identical or substantially identical. Alternatively or additionally, the membrane electrode and frame assembly may comprise at least one edge section, where the frame, the first adhesive layer and the second adhesive layer may be aligned to be flush with each other along their inner perimeters.

Thereby, a more abrupt change in height is implemented so that a contact area between the other GDL can be maximized.

Alternatively or additionally, it is also conceivable that the membrane electrode and frame assembly may be configured such that the inner perimeter of the frame and the inner perimeter of the first adhesive layer are identical or substantially identical, and the inner perimeter of the second adhesive layer may be smaller in size than said inner perimeters, preferably at the edge section.

According to a further preferred embodiment, the outer perimeter of the first adhesive layer, the outer perimeter of the second adhesive layer and the outer perimeter of at least one of the gas diffusion layers may extend with each other. Alternatively or additionally, the outer perimeter of the frame may extend beyond the outer perimeter of the catalyst coated membrane assembly, the outer perimeters of the gas diffusion layers, the outer perimeter of the first adhesive layer and the outer perimeter of the second adhesive layer.

Preferably, the outer perimeter of the first adhesive layer, the outer perimeter of the second adhesive layer, the outer perimeter of at least one of the gas diffusion layers and the outer perimeter of the catalyst coated membrane assembly may extend with each other to be flush with each other along said outer perimeters.

Thereby, arranging the MEFA in the cell stack can be improved as defined surface areas exist for aligning the MEFA in the stack.

According to a preferred embodiment, the one of the gas diffusion layers may be the anode gas diffusion layer. Preferably, at least one of the gas diffusion layers may comprise carbon fibre paper. According to a further preferred embodiment, the frame may comprise ports for fluids to be supplied to and to be removed from the fuel cell stack. Preferably, the frame may be a polyethylene naphthalate film.

Thereby, the distribution of the fluid reactants to the electrodes and the removal of fluid by-products from the electrodes can be improved.

According to a preferred embodiment, the first adhesive layer and/or the second adhesive layer may comprise a polymer selected from the group comprising epoxies, urethanes, polyisobutylene, polyolefins, polyethylene and curable cross-linking agents.

Thereby, a bond between the components can be quickly and reliably established.

A further aspect of the invention relates to a solid polymer electrolyte fuel cell stack that comprises a series stack of a plurality of the membrane electrode and frame assemblies.

With the solid polymer electrolyte fuel cell stack the same advantages and effects can be achieved as described already above for the MEFA. In particular, sealing properties can be improved and manufacturing costs can be reduced due to the possibility of manufacturing the MEFA with a frame having integrated sealing functions.

A further aspect of the invention relates to a method of manufacturing the above-described membrane electrode and frame assembly. The method comprises obtaining the catalyst coated membrane assembly, obtaining the gas diffusion layers, obtaining the frame, and obtaining the first adhesive layer and the second adhesive layer. The catalyst coated membrane assembly, the gas diffusion layers, the frame, the first adhesive layer and the second adhesive layer are stacked such that the first adhesive layer and the second adhesive layer are located on opposite sides of the catalyst coated membrane assembly, the first adhesive layer is located between the catalyst coated membrane assembly and one of the gas diffusion layers, the frame and the second adhesive layer are located between the catalyst coated membrane assembly and the other of the gas diffusion layers, the second adhesive layer is located adjacent to the catalyst coated membrane assembly, and the frame is located adjacent to the other of the gas diffusion layers. The catalyst coated membrane assembly, the gas diffusion layers, the frame, the first adhesive layer and the second adhesive layer are aligned such that the catalyst coated membrane assembly, the one of the gas diffusion layers, the frame, the first adhesive layer and the second adhesive layer overlap at least partially when seen in a cross-section of the membrane electrode and frame assembly. Further, the catalyst coated membrane assembly, the gas diffusion layers, the frame, the first adhesive layer and the second adhesive layer are aligned such that the catalyst coated membrane assembly, the second adhesive layer, and the other of the gas diffusion layers overlap at least at the connection section of the second adhesive layer when seen in a cross-section of the membrane electrode and frame assembly. The first adhesive layer is activated such that the first adhesive layer bonds the one of the gas diffusion layers to the catalyst coated membrane assembly. The second adhesive layer is activated such that the second adhesive layer bonds the catalyst coated membrane assembly to the other of the gas diffusion layers and to the frame.

In the context of the invention, "activating" may refer to a process which renders an ADL "sticky" and capable of adhering to the various components in the MEFA. For instance, activating may include the process of curing a curable adhesive such as an epoxy. Activating may also include the process of thermally treating a thermosetting adhesive such as urethane or a polyisobutylene or a thermoplastic adhesive such as a polyolefin. Further, activating may include chemically treating a suitable chemically activated adhesive material (e.g. activating using UV radiation). Thus, depending on the nature of the materials used in the ADL, an activating step may involve curing, thermally activating, and/or chemically activating.

As described already above, this configuration allows that most components of the MEFA can be bonded to each other in roll-to-roll processes and only selected components may require the application of a different manufacturing method, such as a pick-and-place process. Further, the configuration of the second ADL with respect to the frame allows that no additional adhesives are needed for attaching the frame and the other GDL to the CCMA, so the frame can be added with sealing functionality already integrated. Thereby, the production speed of the MEFA can be increased without compromising structural integrity.

Preferably, the method may comprise the step of aligning the frame with the second adhesive layer such that at least the connection section extends beyond the inner perimeter of the frame. Alternatively or additionally, the method may comprise aligning the other of the gas diffusion layers with the inner perimeter of the frame.

According to a preferred embodiment, the first and the second adhesive layer may be respectively obtained on a carrier layer. Preferably, the method may further comprise cutting an opening with a peripheral inner edge, which may define an inner perimeter of the opening, into the first adhesive layer and into the second adhesive layer, respectively. The opening may have any form, such as circular, elliptic, polygonal, rectangular, square or triangular. Further, the method may comprise removing the carrier layer from the first adhesive layer and the second adhesive layer after cutting the respective opening.

According to a further preferred embodiment, the method may comprise bonding the catalyst coated membrane assembly to the first adhesive layer and/or to the second adhesive layer by activating the respective adhesive layer under the application of heat and/or pressure, preferably in a roll-to-roll process. Therein, preferably at least one of the respective carrier layers may be removed after said bonding.

According to a preferred embodiment, the method may further comprise bonding the one of the gas diffusion layers to the first adhesive layer by activating the first adhesive layer, preferably under the application of heat and/or pressure, even more preferred in a roll-to-roll process. Preferably said activating may be completed after removing the carrier layer of the first adhesive layer and before removing the carrier layer of the second adhesive layer.

With any of the above configurations it becomes possible that the ADLs can be attached to the individual components of the MEFA in a roll-to-roll process on carrier layers. Therein, it is a particular advantage that the carrier layers may be able to provide additional mechanical stability during the manufacturing process so that the quality of the MEFA can be improved.

According to a further preferred embodiment, the method may comprise cutting the first adhesive layer, the second adhesive layer, the one of the gas diffusion layers and preferably, if present, the carrier layer of the second adhesive layer, after being bonded to each other, along a cutting line identical or parallel to an outer peripheral edge of the catalyst coated membrane assembly such that their resulting outer perimeters are coterminous. Therein, it is conceivable that the cutting line may extend not only in parallel outside or along the extension of the catalyst coated membrane assembly (i.e. identical) but also can be defined to extend freely within the extension of the catalyst coated membrane assembly so that the outer perimeter of the catalyst coated membrane assembly may be re-defined in the cutting step. Thus, after the cutting step, the outer perimeters of at least the first adhesive layer, the second adhesive layer, preferably one of the gas diffusion layers, and the catalyst coated membrane assembly may be coterminous. Alternatively, it is also conceivable that the cutting line extends outside of the outer perimeter of the catalyst coated membrane assembly and thus, the outer perimeter of the catalyst coated membrane assembly is, unlike said other layers, not trimmed in said cutting step.

Preferably, the method may further comprise removing the carrier layer of the second adhesive layer if present, after the cutting.

Thereby, a uniform size of the MEFA can be ensured and the manufacturing speed can be improved since multiple components are trimmed simultaneously to have outer perimeters that are flush with each other.

According to a preferred embodiment, the method may further comprise bonding the frame to the catalyst coated membrane assembly by activating the second adhesive layer. Alternatively or additionally, the method may comprise bonding the other of the gas diffusion layers to the catalyst coated membrane assembly by activating the second adhesive layer at the connection section.

Thereby, a strong material bond between the respective components can be established.

A further aspect of the invention relates to a membrane electrode and frame assembly produced by the above-described manufacturing method.

These and other aspects of the invention are evident upon reference to the attached Figures and following detailed description.
- **Figure 1**: shows a schematic cross-sectional view of a MEFA of the prior art.
- **Figures 2 and 3**: illustrate possible faults or damages that may occur during manufacturing a MEFA with a frame having sealing structures using the configuration of the prior art MEFA of Figure 1.

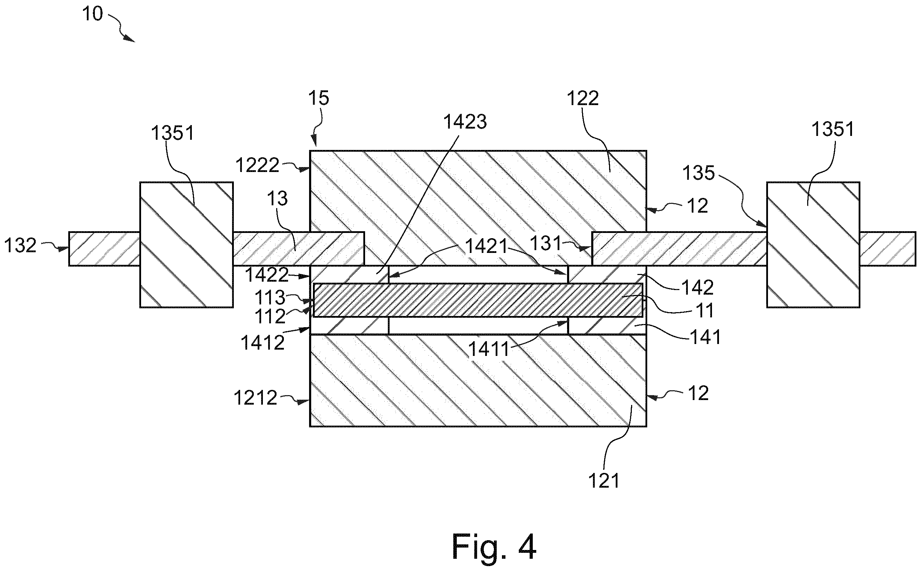

- **Figure 4**: shows a schematic cross-sectional view of an embodiment of a MEFA of the invention.

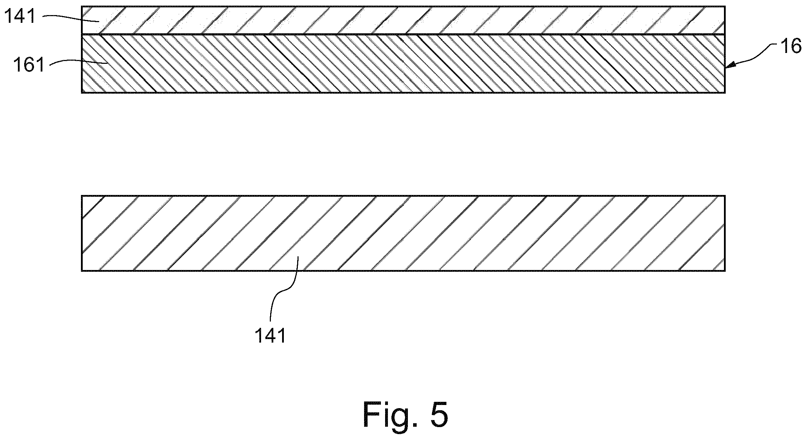

- **Figures 5 to 13**: show schematic views of manufacturing steps of an embodiment of a method of manufacturing the MEFA of the invention.

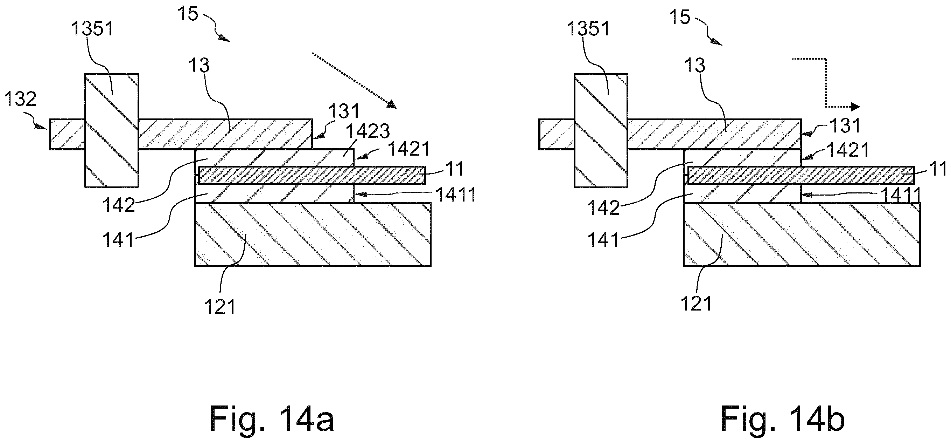

- **Figures 14 to 16**: show schematic close-up cross-sectional views of different embodiments of the MEFA of the invention in the vicinity of the frame.

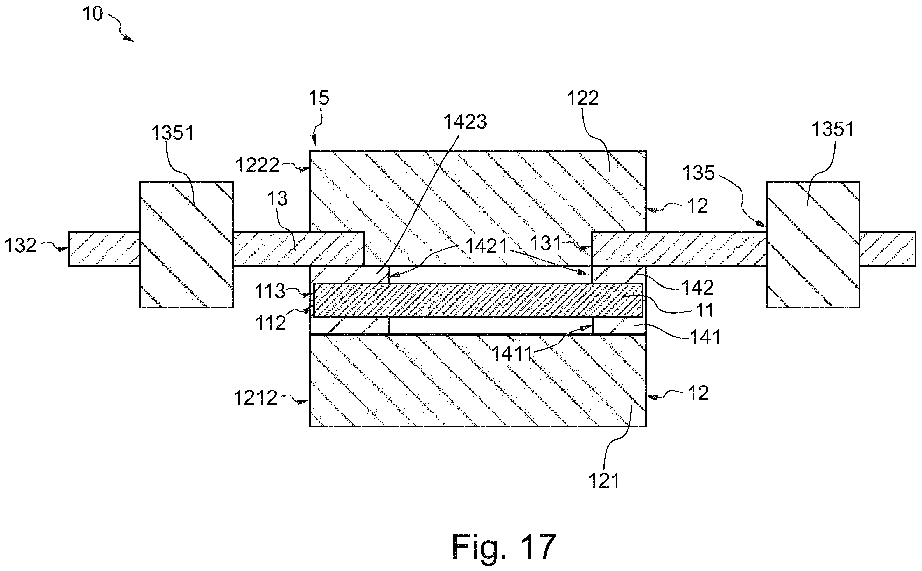

- **Figure 17**: shows a schematic view of a manufacturing step of an embodiment of a method of manufacturing the MEFA of the invention and a schematic cross-sectional view of a further embodiment of a MEFA of the invention.

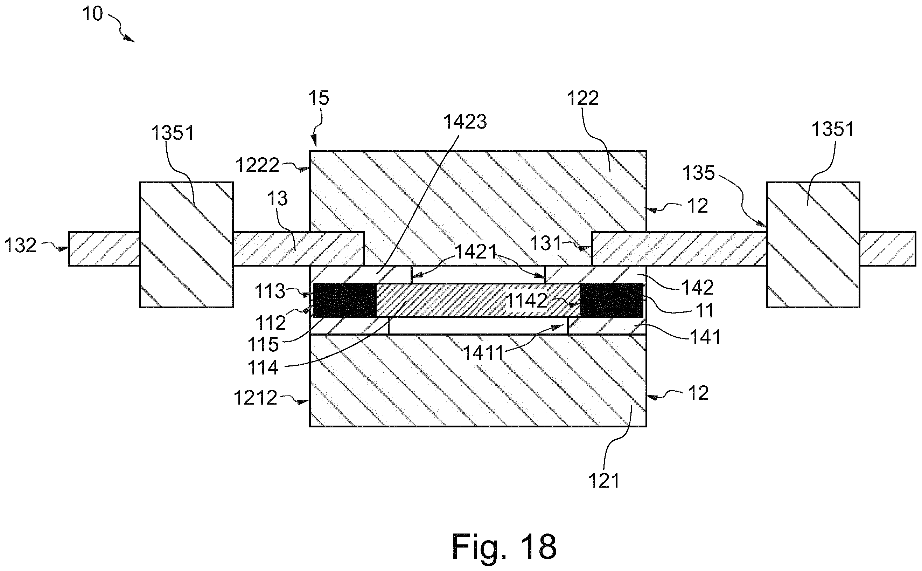

- **Figure 18**: shows a schematic cross-sectional view of a further embodiment of a MEFA of the invention.

Figures 1 to 3 show a design and problems existing with the prior art design of a MEFA. Figures 4 to 18 show different views and different aspects of different embodiments of a MEFA 10 of the invention. In addition, Figures 4 to 17 show embodiments of a method for manufacturing the MEFA 10 according to the invention.

Reference is made to Figures 4 and 17, which show two similar, but different embodiments of the MEFA 10 of the invention. The MEFA 10 is configured for being used in a solid polymer electrolyte fuel cell stack or as a water electrolyzer cell, and comprises a CCMA 11.

The CCMA 11 comprises an anode catalyst layer, a cathode catalyst layer, and a solid polymer membrane electrolyte. The anode catalyst layer and the cathode catalyst layer are bonded to opposite sides of the solid polymer membrane electrolyte and serve as the anode and cathode electrodes in the MEFA 10. Any suitable CCMA may be considered for the CCMA 11, including window coated or non-window coated CCMAs. For instance, the CCMA 11 may comprise an active area that is coated with catalyst layers on both sides, and an inactive area that does not comprise a catalyst layer. The CCMA 11 may be provided as a flexible film material, for example. The CCMA 11 may comprise an outer peripheral edge 113 defining an outer perimeter 112 of the CCMA 11.

Preferably, the elements of the MEFA 10 may be centered with respect to the CCMA 11. Preferably, the CCMA 10 may comprise one or more symmetry axes. More preferred, the MEFA 10 may comprise symmetry axis that may be aligned with at least one of the symmetry axes of the CCMA 10.

The MEFA 10 comprises GDLs 12, 121, 122. In particular, the GDLs 12 comprise an anode GDL located adjacent to the anode catalyst layer of the CCMA 11 and a cathode GDL located adjacent to the cathode catalyst layer of the CCMA 11. For instance, in Figures 4 and 17, one of the GDLs 12, 121, 122 namely the one GDL 121, may be the anode GDL. The GDLs 12, 121, 122 may be provided as a film material, such as carbon fibre paper. Additionally, the GDLs 12, 121, 122 may incorporate a variety of additives to modify flow, electrical conductivity, and/or wettability of the film material. The GDLs 121, 122 may be similar or different in construction.

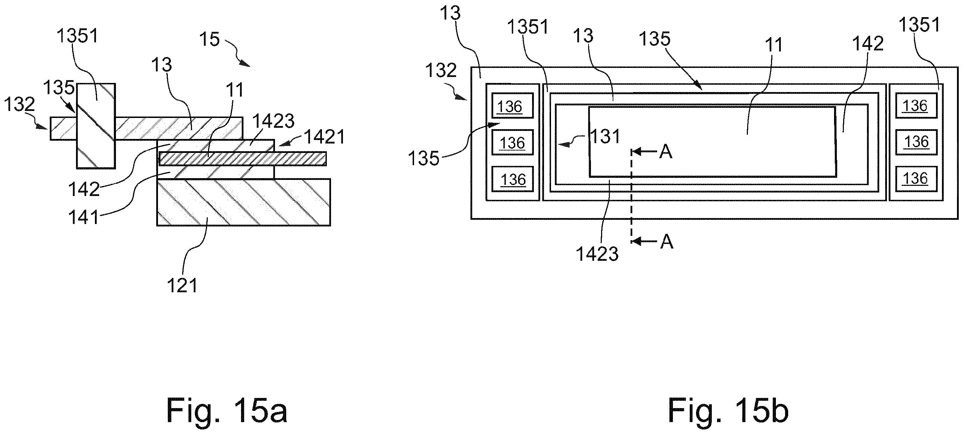

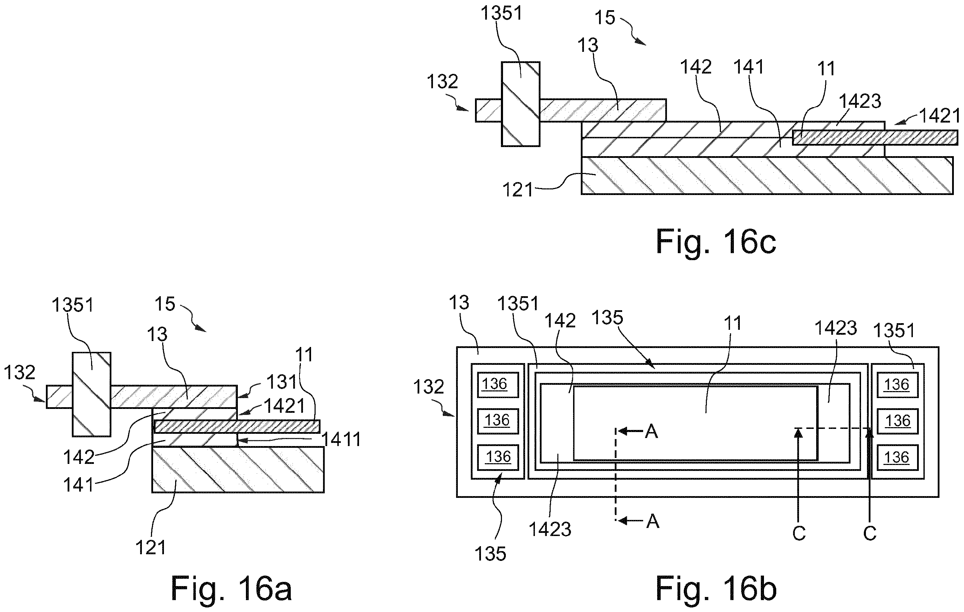

The MEFA 10 comprises a frame 13 that is suitable and configured for providing mechanical support or structure for the CCMA 11 in the MEFA 10. For example, the frame 13 may be made from a film material, such as polyethylene naphthalate film. The frame 13 extends between an inner perimeter 131 and an outer perimeter 132. For instance, the frame 13 may comprise rectangular shape with a rectangular through hole comprising a circumferential edge that may define the inner perimeter 131 of the frame 13. This is exemplarily illustrated in Figures 15b and 16b. From Figures 15b and 16b it can be further taken that the frame 13 may comprise ports 136 for fluids to be supplied to and to be removed from the fuel cell stack. The ports 136 may be provided for fuel, oxidant, and coolant fluids supplied to and exhausted from an assembled fuel cell stack. Further, Figures 15b and 16b illustrate that the outer perimeter 132 of the frame 13 may extend beyond the outer perimeters of all other components of the MEFA 10.

The frame 13 comprises a sealing section 135 that provides a sealing function, such as sealing the fuel cell from leaking fluids or gas. The sealing section 135 may be located between the inner perimeter 131 and the outer perimeter 132 of the frame 13. Preferably, the sealing section 135 may extend along with the outer perimeter 132 of the frame 13 and/or with the ports 136. This is exemplarily shown in Figures 15b and 16b. The sealing section 135 may comprise a sealing element 1351 of an elastomeric sealing material. The sealing element 1351 may be integrally or monolithically provided with the frame 13. The frame 13 may be configured for carrying the CCMA 11 and MEFA 10 on one or two side faces of its plate-like structure.

The MEFA 10 comprises ADLs 141, 142, namely a first ADL 141 and a second ADL 142. Naturally, the MEFA 10 may also comprise additional ADLs. Each of the ADLs 141, 142 extends between an inner perimeter 1411, 1421 and an outer perimeter 1412, 1422. The ADLs 141, 142 may be made of a material which can be activated so as to become sticky and to adhere to the various components in the MEFA 10 thereby bonding them together. For instance, the ADLs 141 may be provided as film materials comprising a polymer.

The first ADL 141 and the second ADL 142 are bonded to opposite sides of the CCMA 11. The first ADL 141 and the second ADL 142 may be arranged at a circumferential edge of the MEFA 10. For instance, the first ADL 141 and the second ADL 142 may be arranged at an edge section 15 of the MEFA 10. The edge section 15 is exemplarily illustrated in Figures 14 to 16 without the provision of one of the GDLs 12.

The first ADL 141 is located between the CCMA 11 and the one GDL 121 such that the first ADL 141 bonds the one GDL 121 to the CCMA 11. For instance, the one GDL 121 may be the anode GDL. The second ADL 142 and the frame 13 are located between the CCMA 11 and the other of the GDLs, namely the other GDL 122, such that the second ADL 142 is located adjacent to the CCMA 11 and that the frame 13 is located adjacent to the other GDL 122. Further, the second ADL 142 bonds the frame 13 to the CCMA 11.

The second ADL 142 comprises at least one connection section 1423 at the inner perimeter 1421. The connection section 1423 extends beyond the inner perimeter 131 of the frame 13 so to allow for bonding the other GDL 122 to the CCMA 11. For instance, as illustrated in Figures 15 and 16, the connection section 1423 may be formed with the inner perimeter 1421 of the second ADL 142 and extend along the inner perimeter 1421 of the second ADL 142. In Figures 16 and 17 it is shown that, unlike in Figures 4 and 15, the second ADL 142 may comprise the connection section 1423 only along a portion of the inner perimeter 1421. For instance, the connection section 1423 may be formed only on one portion of the MEFA 10, such as illustrated by Figure 16. Therein, the cross-section along line A-A of Figure 16b, which is displayed in Figure 16a, shows that the connection section 1423 is not provided in a lengthwise direction of the MEFA 10. In comparison, the cross-section along line C-C of Figure 16b, which is displayed in Figure 16c, shows that the connection section 1423 is provided in a widthwise direction of the MEFA 10.

Figures 14a and 14b show two exemplary configurations of the MEFA 10 at the edge section 15 without the other GDL 122. The two configurations distinguish from each other in the size of the inner perimeters of the frame 13, of the second ADL 142 and preferably of the first ADL 141. For instance, at the edge section 15 illustrated in Figure 14a, the inner perimeter 131 of the frame 13, and the inner perimeter 1421 of the second ADL 142 and/or the inner perimeter 1411 of the first ADL 141 reduces in size in this order. The gentle transition between these components is indicated in Figure 14a by an arrow with a dashed line. In comparison, Figure 14b illustrates a more abrupt change in height, which is indicated by a stepped arrow with a dashed line. In Figure 14b, the inner perimeter 131 of the frame 13, the inner perimeter 1411 of the first ADL 141 and the inner perimeter 1421 of the second ADL 142 are identical or substantially identical at the edge section 15 so to be flush with each other along their inner perimeters 131, 1411, 1421.

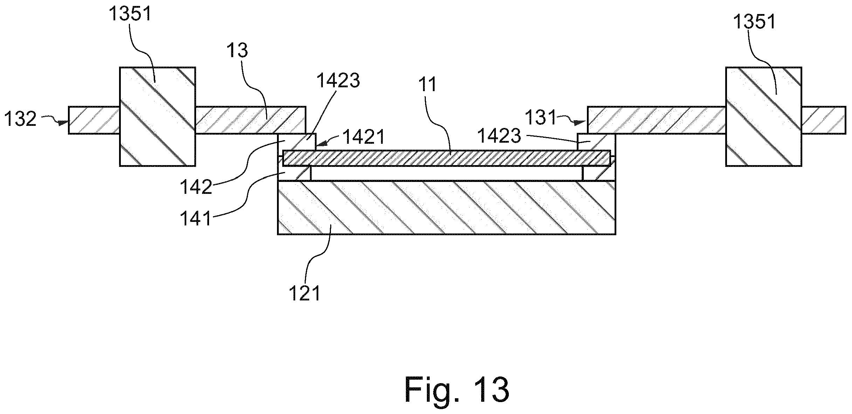

Generally, it is conceivable that the MEFA 10 may comprise a configuration, in which the inner perimeter 1411 of the first ADL 141 and the inner perimeter 1421 of the second ADL 142 are at least partially identical or substantially identical to each other so to be flush with each other at their inner perimeters 1411, 1421 (e.g. Figures 14). Alternatively, it is also conceivable that the inner perimeter 1411 of the first ADL 141 is at least partially smaller than the inner perimeter 1421 of the second ADL 142, or vice versa (e.g. Figures 13 and 18). Thus, effectively, one of the ADLs 141, 142 may be shorter than the other of the ADLs 142, 141. Naturally, it is also conceivable for the above configurations to exist not only partially but completely.

Alternatively or additionally, it may be also generally conceivable to provide the CCMA 11 such that its outer perimeter 112 may be at least partially identically or substantially identically to at least one of the outer perimeters 1412, 1422 of the ADLs 141, 142 (e.g. Figures 4, 16a and 17). Alternatively or additionally, the CCMA 11 may be configured such that its outer perimeter 112 may be smaller than at least one of the outer perimeters 1412, 1422 of the ADLs 141, 142 (e.g. Figure 16c). Naturally, it is also conceivable for the above configurations to exist not only partially but completely.

Alternatively or additionally, it may be also generally conceivable to provide the CCMA 11 such that its outer perimeter 112 may be at least partially smaller than the inner perimeter 131 of the frame 13 (e.g. Figure 16c). Alternatively or additionally, the CCMA 11 may be configured such that its outer perimeter 112 may be at least partially bigger than the inner perimeter 131 of the frame 13 but smaller than the outer perimeter 132 of the frame (e.g. Figures 4, 16a, 17 and 18). Naturally, it is also conceivable for the above configurations to exist not only partially but completely.

Alternatively or additionally, it may be also generally conceivable to provide at least one of the first ADL 141 and the second ADL 142 with its respective inner perimeter 1411, 1421 being at least partially identical or bigger than the inner perimeter 131 of the frame 13 (e.g. Figures 14b, 16a, 17 and 18). Alternatively or additionally, at least one of the first ADL 141 and the second ADL 142 may comprise a respective inner perimeter 1411, 1421 that is smaller than the inner perimeter 131 of the frame 13 (e.g. Figures 4, 14a, 16c, 17 and 18). Naturally, it is also conceivable for the above configurations to exist not only partially but completely.

Alternatively or additionally, it may be also generally conceivable to provide the CCMA 11 such that the CCMA 11 may comprise catalyst layers being provided within a defined area only. Thus, an electrochemically active area 114 may be formed. This is exemplarily illustrated in Figure 18. The active area 114 may extend on at least one of the side surfaces of the CCMA 11 within an outer active area perimeter 1142. Thus, for instance, the CCMA 11 may be coated with a catalyst entirely on one side and only coated partially on the other side. Preferably, the active area 114 may be provided centrally on the CCMA 11. Thus, beyond the outer active area perimeter 1142 a catalyst free area 115 may exist. Preferably, the outer active area perimeter 1142 may be bigger than the inner perimeter 1411, 1421 of the first ADL 141 and the second ADL 142. Alternatively or additionally, the outer active area perimeter 1142 may be at least identical or bigger than the inner perimeter 131 of the frame 13.

In the following, an embodiment of the method of manufacturing the above MEFA 10 according to the invention is exemplary described.

Therein, the CCMA 11, the GDLs 12, 121, 122 and the frame 13 are obtained. Preferably, the frame 13 may be obtained after the sealing elements 1351 are integrated in the frame 13 at the sealing sections 135. This may be done, for example, by injection moulding.

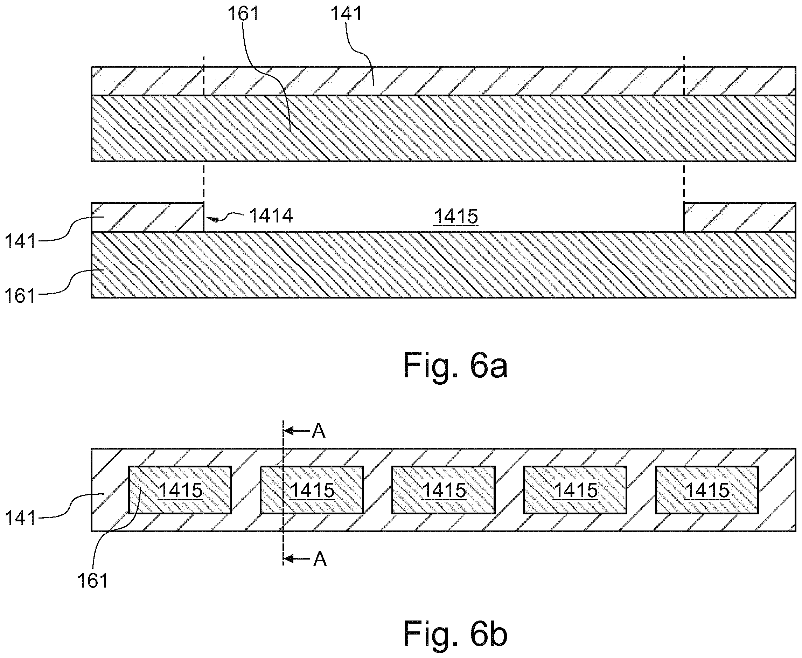

Also, the first ADL 141 and the second ADL 142 are obtained. Figures 5 and 6 illustrate this step exemplarily for the first ADL 141. However, the steps are equally applicable for the second ADL 142.

In Figure 5, showing a cross-section and a top view, the ADLs 141, 142 are exemplarily provided on a carrier layer 16, 161, 162.

An opening 1415 with a peripheral inner edge 1414, which defines the inner perimeter 1411 of the opening 1415, is cut into the first ADL 141 along a cutting line indicated in Figure 6a. For example, a kiss-and-cut process may be used. The same may be done for the second ADL 142, so that it comprises an opening 1425 and a peripheral inner edge 1425. Figure 6b shows a top view of a resulting continuous film section of the first ADL 141 being provided on the carrier layer 161. Figure 6a shows also a cross-section along lines A-A of Figure 6b.

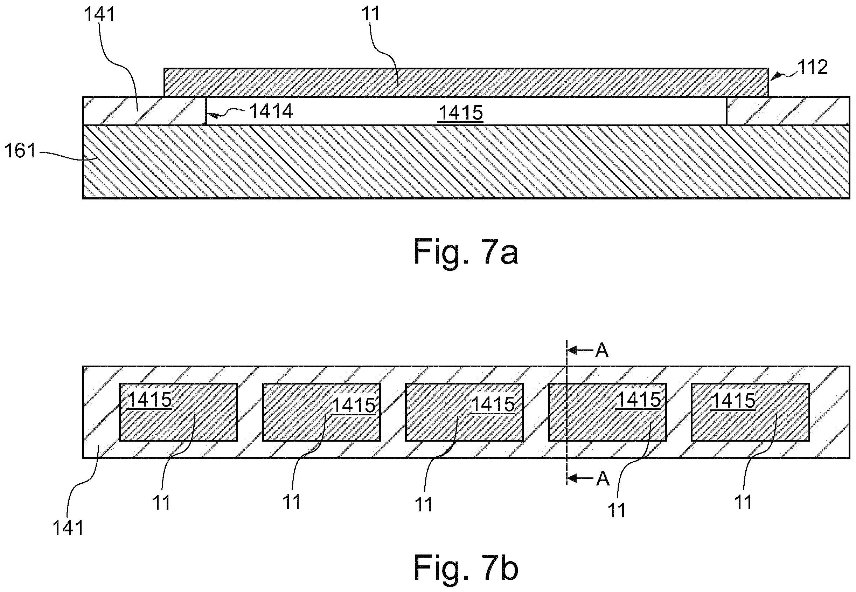

In Figure 7, the step of aligning and bonding the CCMA 11 to the first ADL 141 is exemplarily illustrated. Figure 7a shows a cross-section along lines A-A of Figure 7b.

Figure 7b shows a top view of a resulting continuous film section of the assembly produced in this process step.

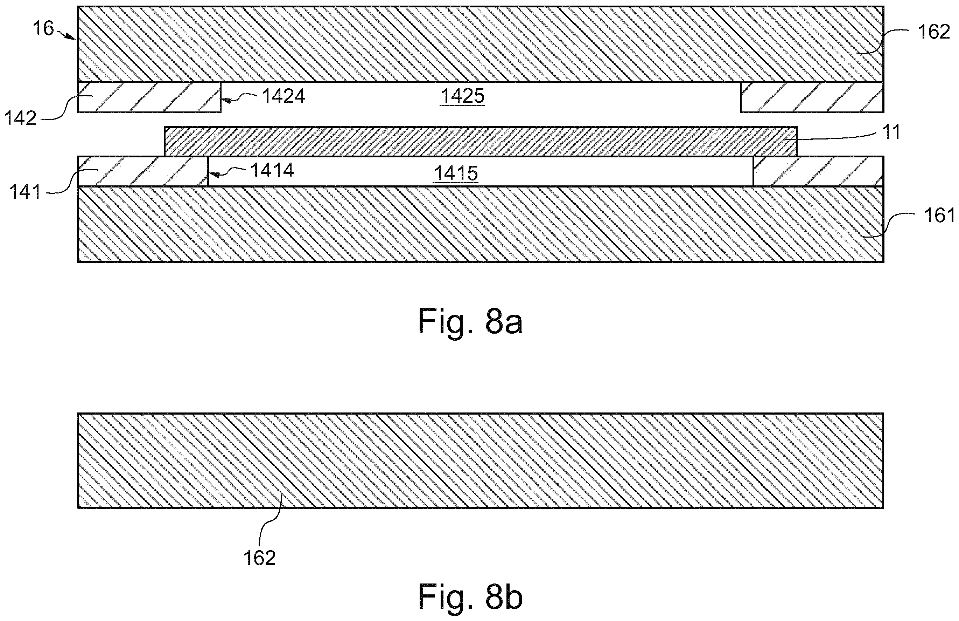

In Figure 8a, the step of aligning and bonding the assembly of Figure 7 to the second ADL 142, which is provided on carrier layer 162, is shown. Figure 8b shows the resulting assembly in a top view.

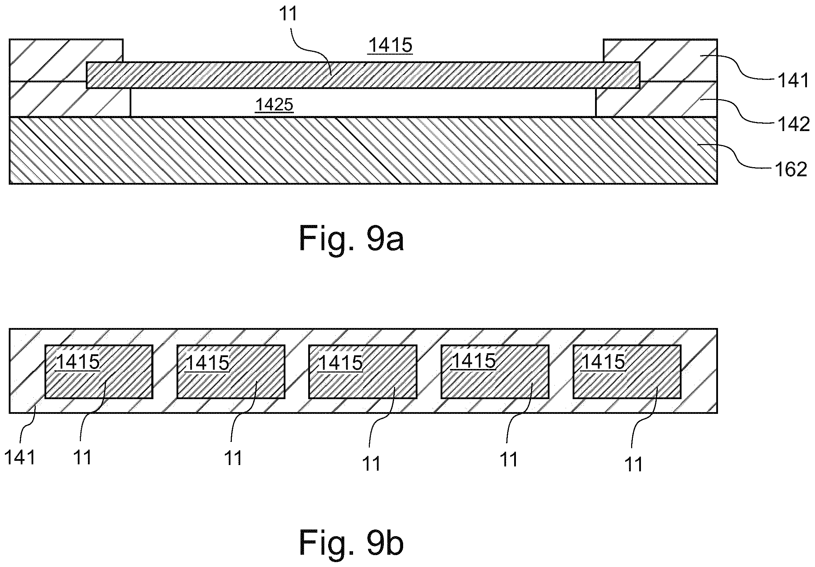

In Figure 9a, the step of removing the carrier layer 161 from the first ADL 141 after completing the step of Figure 8 is illustrated. Figure 9b shows the resulting assembly in a top view.

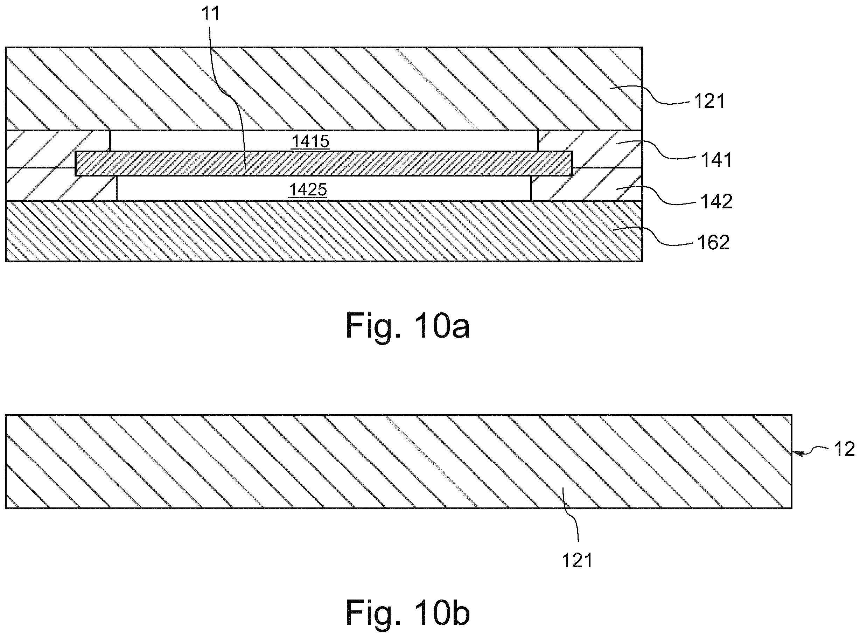

In Figure 10a, the step of aligning and bonding the first GDL 121 to the assembly of Figure 9 is illustrated. Figure 10b shows the resulting assembly in a top view.

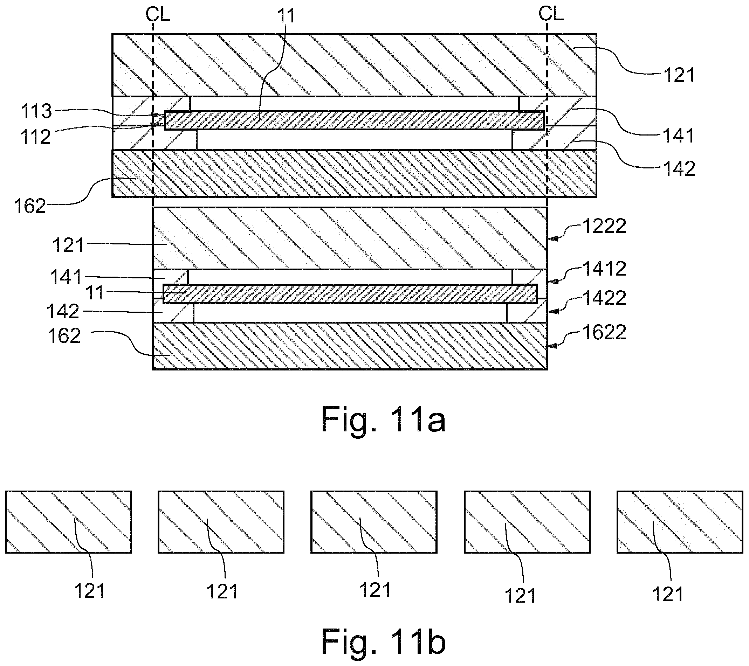

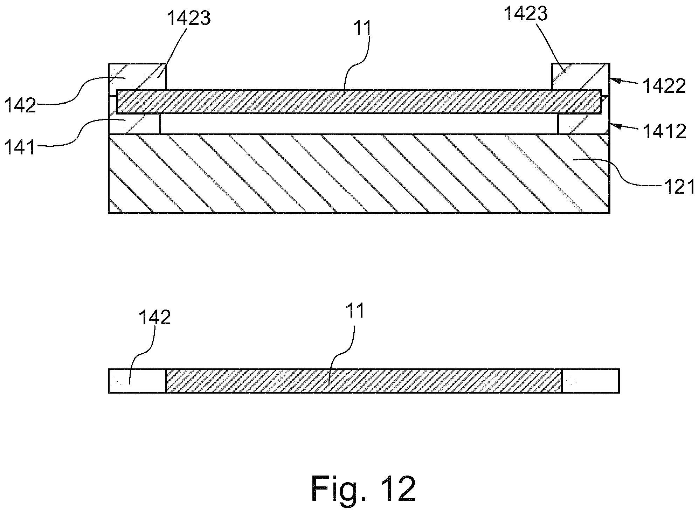

In Figure 11a, the step of cutting the first ADL 141, the second ADL 142, the one GDL 121 and the carrier layer 162 of the second ADL 142 along a cutting line CL is illustrated. Preferably, the cutting line CL may extend parallel to the outer peripheral edge 113 of the CCMA 11. Preferably, the assembly may be cut to the size of the one GDL 121. As result of this cutting step, the outer perimeters 1412, 1422, 1212, 1222, 1622 of the respective components are coterminous. As further illustrated by the top view of Figure 12b, after this step, the continuous film is split into individual subcomponents.

It is noted that at least all of the above-described steps can be completed as roll-to-roll process steps. Bonding components with the first ADL 141 and/or the second ADL 142 may be achieved by activating the respective ADLs 141, 142 under the application of heat and/or pressure.

In Figure 12, it is illustrated that the carrier layer 162 of the second ADL 122 is removed.

In Figure 13, the step of aligning and bonding the frame 13 comprising the sealing elements 1351 to the assembly of Figure 12 is exemplarily illustrated. In Figure 13, the frame 13 is aligned with the second ADL 142 such that at least the connection section 1423 extends beyond the inner perimeter 131 of the frame 13. Figures 14 to 16 show various other configurations and arrangements of the various components of the MEFA 11 with respect to each other, which were already described in detail above. Preferably, the step of Figure 13 may be a pick-and-place process.

In Figure 17, the final step of aligning and bonding the second GDL 122 to the CCMA 11 and the frame 14 by activating the second adhesive layer 142 is illustrated. From Figure 17, it can be seen that the CCMA 11, the one GDL 121, the frame 13, the first ADL 141 and the second ADL 142 are aligned and arranged such that they overlap when seen in a cross-section of the MEFA 10. Moreover, it becomes clear that with this configuration the CCMA 11, the second ADL 142 and the other GDL 122 overlap at the connection section 1423 of the second ADL 142 when seen in a cross-section of the MEFA 10. Preferably, the step of Figure 17 may be a pick-and-place process.

The invention is not limited by the embodiments as described hereinabove, as long as being covered by the appended claims. All features of the embodiments described hereinabove can be combined in any possible way and be provided interchangeably.

### Reference signs

- 10: membrane electrode and frame assembly
- 11: catalyst coated membrane assembly
- 112: outer perimeter of the catalyst coated membrane assembly
- 113: outer peripheral edge of the catalyst coated membrane assembly
- 114: active area
- 1142: outer active area perimeter
- 115: catalyst free area
- 12: gas diffusion layers
- 121: the one gas diffusion layer
- 1212: outer perimeter of the one gas diffusion layer
- 122: the other gas diffusion layer
- 1222: outer perimeter of the other gas diffusion layer
- 13: frame
- 131: inner perimeter of the frame
- 132: outer perimeter of the frame
- 135: sealing section
- 1351: sealing element
- 136: port
- 141: first adhesive layer
- 142: second adhesive layer
- 1411: inner perimeter of the first adhesive layer
- 1412: outer perimeter of the first adhesive layer
- 1414: peripheral inner edge of the opening in the first adhesive layer
- 1415: opening in the first adhesive layer
- 1421: inner perimeter of the second adhesive layer
- 1422: outer perimeter of the second adhesive layer
- 1423: connection section
- 1424: peripheral inner edge of the opening in the second adhesive layer
- 1425: opening in the second adhesive layer
- 15: edge section
- 16: carrier layers
- 161: carrier layer of the first adhesive layer
- 162: carrier layer of the second adhesive layer
- 1622: outer perimeter of the carrier layer of the second adhesive layer
- CL: cutting line
- 900: prior art MEFA (membrane electrode and frame assembly)
- 911: prior art catalyst coated membrane assembly
- 921: a first prior art gas diffusion layer
- 922: a second prior art gas diffusion layer
- 929: fracture
- 930: prior art frame
- 931: prior art first frame component
- 932: prior art second frame component
- 935: prior art sealing component
- 936: prior art second sealing component
- 937: fracture
- 941: prior art first adhesive layer
- 942: prior art second adhesive layer
- 943: prior art third adhesive layer
- 944: prior art fourth adhesive layer
- 949: damaged section

## Claims

1. A membrane electrode and frame assembly (10) for a solid polymer electrolyte fuel cell stack comprising:
- a catalyst coated membrane assembly (11) comprising
∘ an anode catalyst layer,
∘ a cathode catalyst layer, and
∘ a solid polymer membrane electrolyte,
wherein the anode catalyst layer and the cathode catalyst layer are bonded to opposite sides of the solid polymer membrane electrolyte;
- gas diffusion layers (12, 121, 122), comprising
∘ an anode gas diffusion layer located adjacent to the anode catalyst layer of the catalyst coated membrane assembly (11); and
∘ a cathode gas diffusion layer located adjacent to the cathode catalyst layer of the catalyst coated membrane assembly (11); and
- a frame (13) for carrying the catalyst coated membrane assembly (11), wherein the frame (13) extends between an inner perimeter (131) and an outer perimeter (132) and comprises a sealing section (135) for providing a sealing function;
**characterized by**
- a first adhesive layer (141) and a second adhesive layer (142), each adhesive layer (141, 142) extending between an inner perimeter (1411, 1421) and an outer perimeter (1412, 1422); wherein the first adhesive layer (141) and the second adhesive layer (142) are bonded to opposite sides of the catalyst coated membrane assembly (11);
wherein the first adhesive layer (141) is located between the catalyst coated membrane assembly (11) and one of the gas diffusion layers (121) such that the first adhesive layer (141) bonds the one of the gas diffusion layers (121) to the catalyst coated membrane assembly (11);
wherein the second adhesive layer (142) and the frame (13) are located between the catalyst coated membrane assembly (11) and the other of the gas diffusion layers (122) such that the second adhesive layer (142) is located adjacent to the catalyst coated membrane assembly (11) and that the frame (13) is located adjacent to the other of the gas diffusion layers (122);
wherein the second adhesive layer (142) bonds the frame (13) to the catalyst coated membrane assembly (11); and
the second adhesive layer (142) comprises at least one connection section (1423) at the inner perimeter (1421) that extends beyond the inner perimeter (131) of the frame (13) to bond the other of the gas diffusion layers (122) to the catalyst coated membrane assembly (11).

2. The membrane electrode and frame assembly (10) according to claim 1,
**characterized in that**
the sealing section (135) comprises a sealing element (1351) for providing the sealing function, wherein the sealing element (1351) is preferably integrally provided with the frame (13) and/or preferably made of an elastomeric sealing material, and/or
the sealing section (135) is located between the inner perimeter (131) and the outer perimeter (132) of the frame (13), and preferably extends at least partially along with the outer perimeter (132) of the frame (13).

3. The membrane electrode and frame assembly (10) according to anyone of the preceding claims, **characterized in that**
the catalyst coated membrane assembly (11), the first adhesive layer (141), the second adhesive layer (142), and the one of the gas diffusion layers (121) are
- provided as film materials,
- bonded to each other in a roll-to-roll process, and/or
- at least partially cut to size after being bonded to each other so that their outer perimeters (112, 1412, 1422, 1212) are aligned flush with each other.

4. The membrane electrode and frame assembly (10) according to anyone of the preceding claims, **characterized in that**
the connection section (1423) forms at least part of the inner perimeter (1421) of the second adhesive layer (142) by extending at least partially or completely along the inner perimeter (1421) of the second adhesive layer (142), and/or the connection section (1423) is formed such that the inner perimeter (1421) of the second adhesive layer (142) is smaller than the inner perimeter (131) of the frame (13) and smaller than the outer perimeter (112) of the catalyst coated membrane assembly (11).

5. The membrane electrode and frame assembly (10) according to anyone of the preceding claims, **characterized by**
comprising at least one edge section (15),
- where the inner perimeter (131) of the frame (13), and the inner perimeter (1421) of the second adhesive layer (142) and/or the inner perimeter (1411) of the first adhesive layer (141) reduce in size in this order,
- where the inner perimeter (131) of the frame (13), the inner perimeter (1411) of the first adhesive layer (141) and the inner perimeter (1421) of the second adhesive layer (142) are identical or substantially identical, and/or
- where the frame (13), the first adhesive layer (141) and the second adhesive layer (142) are aligned to be flush with each other along their inner perimeters (131, 1411, 1421).

6. The membrane electrode and frame assembly (10) according to anyone of the preceding claims, **characterized in that**
the outer perimeter (1412) of the first adhesive layer (141), the outer perimeter (1422) of the second adhesive layer (142) and the outer perimeter (1212, 1222) of at least one of the gas diffusion layers (12, 121, 122) and preferably the outer perimeter (112) of the catalyst coated membrane assembly (11) extend with each other, and/or
the outer perimeter (132) of the frame (13) extends beyond the outer perimeter (112) of the catalyst coated membrane assembly (11), the outer perimeters (1212, 1222) of the gas diffusion layers (12, 121, 122), the outer perimeter (1412) of the first adhesive layer (141) and the outer perimeter (1422) of the second adhesive layer (142).

7. The membrane electrode and frame assembly (10) according to anyone of the preceding claims, **characterized in that**
the one of the gas diffusion layers (121) is the anode gas diffusion layer,
at least one of the gas diffusion layers (12, 121, 122) comprises carbon fibre paper,
the frame (13) comprises ports (136) for fluids to be supplied to and to be removed from the fuel cell stack, and/or
the frame (13) is a polyethylene naphthalate film.

8. The membrane electrode and frame assembly (10) according to anyone of the preceding claims, **characterized in that**
the first adhesive layer (141) and/or the second adhesive layer (142) comprises a polymer selected from the group comprising epoxies, urethanes, polyisobutylene, polyolefins, polyethylene and curable cross-linking agents.

9. A solid polymer electrolyte fuel cell stack, **characterized by** comprising a series stack of a plurality of the membrane electrode and frame assemblies (10) according to anyone of the preceding claims.

10. A method of manufacturing the membrane electrode and frame assembly (10) of one of the claims 1 to 8 comprising:
- obtaining the catalyst coated membrane assembly (11);
- obtaining the gas diffusion layers (12, 121, 122);
- obtaining the frame (13),
**characterized by**
- obtaining the first adhesive layer (141) and the second adhesive layer (142);
- stacking the catalyst coated membrane assembly (11), the gas diffusion layers (12, 121, 122), the frame (13), the first adhesive layer (141) and the second adhesive layer (142) such that
∘ the first adhesive layer (141) and the second adhesive layer (142) are located on opposite sides of the catalyst coated membrane assembly (11);
∘ the first adhesive layer (141) is located between the catalyst coated membrane assembly (11) and one of the gas diffusion layers (121);
∘ the frame (13) and the second adhesive layer (142) are located between the catalyst coated membrane assembly (11) and the other of the gas diffusion layers (122);
∘ the second adhesive layer (142) is located adjacent to the catalyst coated membrane assembly (11); and
∘ the frame (13) is located adjacent to the other of the gas diffusion layers (122);
- aligning the catalyst coated membrane assembly (11), the gas diffusion layers (12, 121, 122), the frame (13), the first adhesive layer (141) and the second adhesive layer (142) such that
∘ the catalyst coated membrane assembly (11), the one of the gas diffusion layers (121), the frame (13), the first adhesive layer (141) and the second adhesive layer (142) at least partially overlap when seen in a cross-section of the membrane electrode and frame assembly (10), and
∘ the catalyst coated membrane assembly (11), the second adhesive layer (142), and the other of the gas diffusion layers (122) overlap at least at the connection section (1423) of the second adhesive layer (142) when seen in a cross-section of the membrane electrode and frame assembly (10), and
- activating the first adhesive layer (141) such that the first adhesive layer (141) bonds the one of the gas diffusion layers (121) to the catalyst coated membrane assembly (11),
- activating the second adhesive layer (142) such that the second adhesive layer (142) bonds the catalyst coated membrane assembly (11) to the other of the gas diffusion layers (122) and to the frame (13).

11. The method according to claim 10, **characterized in that** the first and second adhesive layer (142) are respectively obtained on a carrier layer (16, 161, 162), and the method further comprises:
- cutting an opening (1415, 1425) with a peripheral inner edge (1414, 1424) defining an inner perimeter (1411, 1421) of the opening (1415, 1425) into the first adhesive layer (141) and into the second adhesive layer (142), respectively;
- removing the carrier layer (16, 161, 162) from the first adhesive layer (141) and the second adhesive layer (142) after cutting the respective opening (1415, 1425).

12. The method according to claim 10 or claim 11, **characterized by**
- bonding the catalyst coated membrane assembly (11) to the first adhesive layer (141) and/or to the second adhesive layer (142) by activating the respective adhesive layer (141, 142) under the application of heat and/or pressure, preferably in a roll-to-roll process, wherein preferably at least one of the respective carrier layers (16, 161, 162) is removed after said bonding.

13. The method according to anyone of claims 10 to 12, **characterized by**
- bonding the one of the gas diffusion layers (12, 121, 122) to the first adhesive layer (141) by activating the first adhesive layer (141), preferably under the application of heat and/or pressure, even more preferred in a roll-to-roll process,
wherein said activating is completed after removing the carrier layer (161) of the first adhesive layer (141) and before removing the carrier layer (162) of the second adhesive layer (142).

14. The method according to anyone of the claims 10 to 13, **characterized by**
- cutting the first adhesive layer (141), the second adhesive layer (142), the one of the gas diffusion layers (121) and preferably, if present, the carrier layer (162) of the second adhesive layer (142), after being bonded to each other, along a cutting line (CL) identical or parallel to an outer peripheral edge (113) of the catalyst coated membrane assembly (11) such that their resulting outer perimeters (112, 1412, 1422, 1212, 1222, 1622) are coterminous,
- preferably, if present, removing the carrier layer (162) of the second adhesive layer (142), after the cutting;
- bonding the frame (13) to the catalyst coated membrane assembly (11) by activating the second adhesive layer (142),
- aligning the other of the gas diffusion layers (12, 121, 122) with the inner perimeter (131) of the frame (13) before activating the second adhesive layer (142), and/or
- bonding the other of the gas diffusion layers (12, 121, 122) to the catalyst coated membrane assembly (11) by activating the second adhesive layer (142) at the connection section (1423).

15. Use of the membrane electrode and frame assembly (10) of one of the claims 1 to 8 or of the solid polymer electrolyte fuel cell stack of claim 9 for electrolysis of water.
